# EUROPÄISCHE PATENTANMELDUNG

(11) **EP 1 923 250 A2**
(43) Veröffentlichungstag der Anmeldung: **21.05.2008**
(21) Anmeldenummer: 07021367.3
(22) Anmeldetag: 02.11.2007
(51) Int. Cl.: B60J 7/20

(54) **Cabriolet-Fahrzeug mit zumindest einem Verkleidungsteil**

(30) Priorität: 14.11.2006 DE 102006053884
(71) Anmelder: Wilhelm Karmann GmbH, 49084 Osnabrück (DE)
(72) Erfinder: Theuerkauf, Jürgen, 49565 Bramsche (DE); Huber, Volker, 49536 Lienen (DE); Kreiling, Nils, 49078 Osnabrück (DE); Peters, Heinz-Werner, 49492 Westerkappeln (DE)

(57) **Zusammenfassung**

Ein Cabriolet-Fahrzeug (1;101;201;301) mit einem zumindest im wesentlichen unterhalb einer Eintrittsöffnung (4) in der Karosserie (5) ablegbaren Dach (2), wobei zumindest ein Teilbereich der Eintrittsöffnung (4), insbesondere quer außen gelegene Teilbereiche, bei abgelegtem Dach (2) durch ein oder mehrere zwischen einer abdeckenden und einer freigebenden Stellung bewegliche Verkleidungsteil(e) (9;10;11;12) mit zumindest einem in sich elastisch verformbaren Bereich (109;110;111; 112) abdeckbar ist oder sind, wird so ausgebildet, dass zumindest einer Seitenkante (15;16) des elastisch verformbaren Bereichs (109;110;111;112) ein beweglicher, in einer flächig liegenden Abdeckstellung den elastischen Bereich spannender Rahmenteil (13;113;213;313) zugeordnet ist, der aus einer den zu verkleidenden Öffnung freilassenden Ruhestellung in eine den verformbaren Bereich (109;110;111;112) spannende Stellung ausschieb- und/oder -schwenkbar ist.

## Beschreibung

Die Erfindung betrifft ein Cabriolet-Fahrzeug mit einem bei seiner Öffnung zumindest im wesentlichen unterhalb einer Eintrittsöffnung in der Karosserie ablegbaren Dach, wobei zumindest ein Teilbereich der Eintrittsöffnung durch ein oder mehrere Verkleidungsteil(e) abdeckbar ist, nach dem Oberbegriff des Anspruchs 1.

Es ist bekannt, zumindest solche Verkleidungsteile, die auch bei geschlossenem Dach in ihrer Freigabestellung verbleiben, zum Erreichen dieser Freigabestellung aus einer mehr oder minder bündig mit umgebenden Außenflächen liegenden Abdeckstellung abzusenken und sie unterhalb von Außenflächen optisch zu verbergen, um dadurch die Eintrittsöffnung möglichst vollständig freizugeben und beispielsweise in quer außen liegenden Bereichen den Durchtritt seitlicher Gestängeteile des Daches zu ermöglichen.

Die DE 296 23 200 U1 zeigt ein elastisch verformbares Verkleidungsteil, das als Spannband ausgebildet ist und damit in Freigabestellung raumsparend innerhalb der Karosserie halterbar ist. Das Spannband ist in Abdeckstellung bei geöffnetem Dach auf Zug beansprucht und muss hierfür von seinen beiden gegenüberliegenden Enden zugeordneten Zugeinrichtungen, die von außen auf das Spannband einwirken und damit einen erheblichen Raumbedarf haben, auseinandergezogen werden. Insbesondere muss ein Zugglied, hier ein an einer gegenüber der Spannbandanbindung gelegenen Lagerkonsole festgelegtes Gummiband, durch einen Raumbereich an dem Spannband angreifen, der für den Durchtritt von Dachteilen zur Verfügung stehen könnte. Die räumliche Anpassung einer derartigen Spannbandkonstruktion an die beengten Verhältnisse im Fahrzeug ist daher schwierig. Zudem kann das Spannband in Abdeckstellung nur eine in Draufsicht lange und schmale Fläche überdecken, was die Einsatzmöglichkeiten verringert und für anders geformte Durchtrittsbereiche, die zu verkleiden sind, weitere Zusatzklappen, etwa die dort mit dem Bezugszeichen 9 versehene Seitenklappe, die eine Dreiecksform hat, erforderlich macht.

Der Erfindung liegt das Problem zugrunde, bei einem gattungsgemäßen Cabriolet-Fahrzeug eine Verbesserung der Bewegungskinematik des Verkleidungsteils zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 14 angegeben.

Erfindungsgemäß ist eine leichte und flexible Art der Verkleidung gebildet, die je nach Ausgestaltung unterschiedliche Formen von Öffnungen überbrücken kann. Beispielsweise kann eine dreiecksförmige Öffnung mit einer an der Außenfläche einstückigen Verkleidung überbrückt werden. Dadurch, dass der Rahmenteil ausschwenk- oder -schiebbar ist, ist ein Zugglied, das die Öffnung überbrücken müsste, entbehrlich.

Der Rahmenteil kann von dem Gewebe der Verkleidung über-und hintergriffen sein, wodurch der Rahmenteil selbst nicht sichtbar ist.

Für eine angenehme Optik auch bei geöffneter Verkleidung ist günstig der zumindest eine Rahmenteil in seiner Ruhestellung unterhalb einer die Eintrittsöffnung seitlich begrenzenden Brüstung der Karosserie optisch verdeckt halterbar. In dieser Stellung kann dann das Verkleidungsteil vollständig aus dem Sichtfeld herausgeführt sein.

Die Kinematik ist besonders einfach, wenn der elastische Bereich der Verkleidung an einer Linie karosseriefest und ebenfalls unterhalb der die Eintrittsöffnung seitlich begrenzenden Brüstung der Karosserie optisch verdeckt halterbar ist. Durch die feste Anbindungslinie kann mit der Auswärtsbewegung des Rahmenteils der Stoff oder dergleichen flexible Bereich gegen diese Linie ohne weitere Maßnahmen glattflächig gespannt werden.

Die karosseriefeste Anbindungslinie kann zumindest im wesentlichen in Fahrzeuglängsrichtung liegen, so dass die Verkleidung von hier aus mit einer erheblichen Komponente in Fahrzeugquerrichtung in Abdeckstellung bewegt werden kann.

Weiterhin kann für eine einfache Kinematik der Rahmenteil aus seiner Ruhestellung ausschwenkbar sein, wobei für die Bewegung um die Schwenkachse ein einziger Freiheitsgrad ausreichend ist.

Sofern die Achse ungefähr vertikal steht, erfolgt die den elastischen Bereich spannende Bewegung in der Ebene, in der die Verkleidung in ihrer Abdeckstellung liegt. Weiter nach unten in die Karosserie reichende mechanische Teile der Kinematik können vermieden werden, wodurch der verbleibende Stauraum für Gepäck wächst.

Sofern der Rahmenteil den elastisch verformbaren Bereich nach Art eines Dreieckstuchs aufspannt, kann ein Rahmenteil in Abdeckstellung mit einer Komponente in Fahrzeuglängsrichtung der Langseite des Dreiecks und/oder ein Rahmenteil in Abdeckstellung mit einer Komponente in Fahrzeugquerrichtung der kurzen Seite des Dreiecks zugeordnet sein. Die Möglichkeiten, eine Verkleidung einer bestimmten Form aufzuspannen, können daher je nach räumlichen Verhältnissen im Fahrzeug gewählt werden.

Zudem kann für eine Abweichung der verkleideten Fläche von einer einfachen geometrischen Form der Rahmenteil in sich ein- oder mehrfach gelenkig geteilt sein. So kann beispielsweise eine unregelmäßige Fünfeckfläche aufgespannt werden.

Hierfür kann ein Gelenk während des Aufbewegens des elastischen Bereichs im Öffnungssinn beaufschlagbar sein und in Abdeckstellung zwei den elastischen Bereich einfassende Arme durch ihr Aufspreizen aufspannen. Diese Kraftbeaufschlagung der Arme im Gelenk kann etwa über eine Federvorspannung bewirkt sein.

Zur weiteren Steigerung der Flexibilität kann der elastisch verformbare Bereich auch um eine zumindest nahezu parallel zur Fahrtrichtung liegende Achse ausschwenkbar sein. Der Rahmenteil ist dadurch bei seiner Bewegung aufwärts und in Fahrzeugquerrichtung verlagerbar und kann in Ruhestellung tief unten in der Karosserie gehalten werden.

Sofern bei geöffnetem Dach das vordere, bei geschlossenem Dach mit einem Windschutzscheibenrahmen verbundene Dachende in gleichbleibender Orientierung abgelegt ist und seine bei geschlossenem Dach nach oben weisende Seite eine optische Abschlussfläche für einen wesentlichen Teil des mittleren Bereichs der Eintrittsöffnung ausbildet, fällt dieses Dachende zu seinen Querseiten hin bei üblicher bombierter Dachgestaltung ab, so dass gerade in diesen Randbereichen die Verwendung erfindungsgemäßer Verkleidungsteile optisch und mechanisch gut zu verwirklichen ist.

Die Verkleidungsteile können dann bei geöffnetem Dach seitlich und zumindest teilweise oberhalb von seitlichen Rändern des vorderen Dachendes liegen.

Weitere Vorteile und Merkmale der Erfindung ergeben sich aus in der Zeichnung schematisch dargestellten und nachfolgend beschriebenen Ausführungsbeispielen des Gegenstandes der Erfindung.

### In der Zeichnung zeigt:

- Fig. 1 bis Fig. 9: eine erste Ausführungsform des Fahrzeugs mit einem einstückigen Schwenkarm als Rahmenteil, das in Abdeckstellung eine kurze Seite eines Dreieckstuchs untergreift, darin
- Fig. 1: eine Draufsicht auf den hinten links gelegenen Teil des erfindungsgemäßen Cabriolet-Fahrzeugs im ersten Ausführungsbeispiel bei geöffnetem Dach und noch geöffneter Verkleidung in der ersten Ausführungsform,
- Fig. 2: das Fahrzeug nach Fig. 1 während des Ausschwenkens des Rahmenteils,
- Fig. 3: eine ähnliche Ansicht wie Fig. 2 bei voll ausgeschwenktem Rahmenteil zur Bewirkung der Abdeckstellung des Verkleidungsteils,
- Fig. 4: eine perspektivische Ansicht von schräg vorne auf den Bereich nach Fig. 1 in Dach- und Verkleidungsteilstellung nach Fig. 1,
- Fig. 5: eine ähnliche Ansicht wie Fig. 4 in Stellung der Teile nach Fig. 2,
- Fig. 6: eine ähnliche Ansicht wie Fig. 5 in Stellung nach Fig. 3,
- Fig. 7: eine perspektivische Ansicht von schräg hinten auf den Bereich nach Fig. 1 in Dach- und Verkleidungsteilstellung nach Fig. 1,
- Fig. 8: eine ähnliche Ansicht wie Fig. 7 in Stellung der Teile nach Fig. 2,
- Fig. 9: eine ähnliche Ansicht wie Fig. 8 in Stellung nach Fig. 3,
- Fig. 10 bis Fig. 13: eine zweite Ausführungsform des Fahrzeugs, ebenfalls mit einem einstückigen Schwenkarm als Rahmenteil, das in Abdeckstellung eine lange Seite eines Dreieckstuchs untergreift, darin

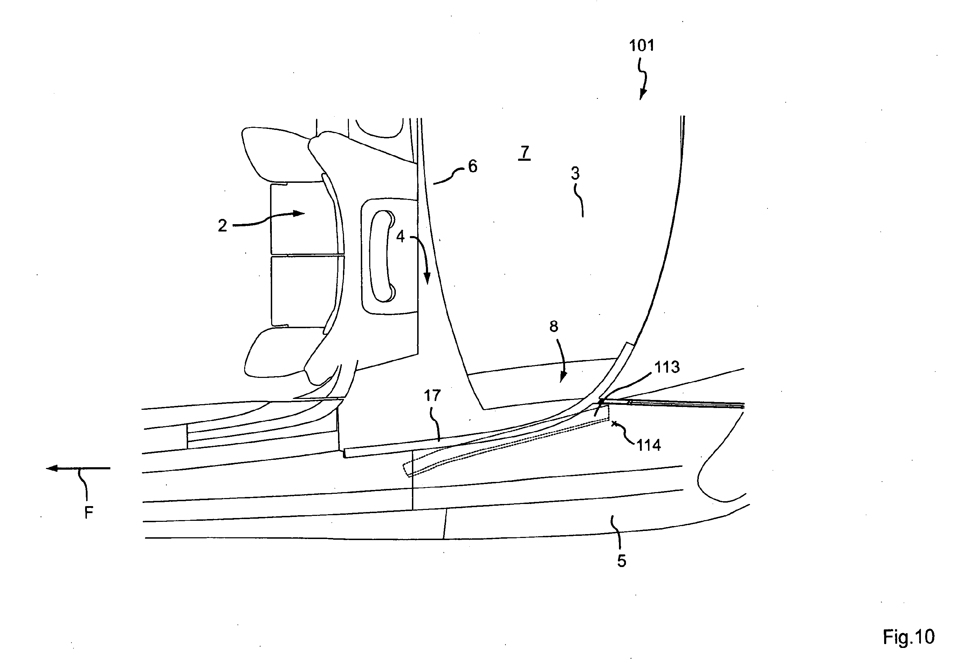

- Fig. 10: eine Draufsicht auf den hinten links gelegenen Teil des erfindungsgemäßen Cabriolet-Fahrzeugs im zweiten Ausführungsbeispiel bei geöffnetem Dach und noch geöffneter Verkleidung,

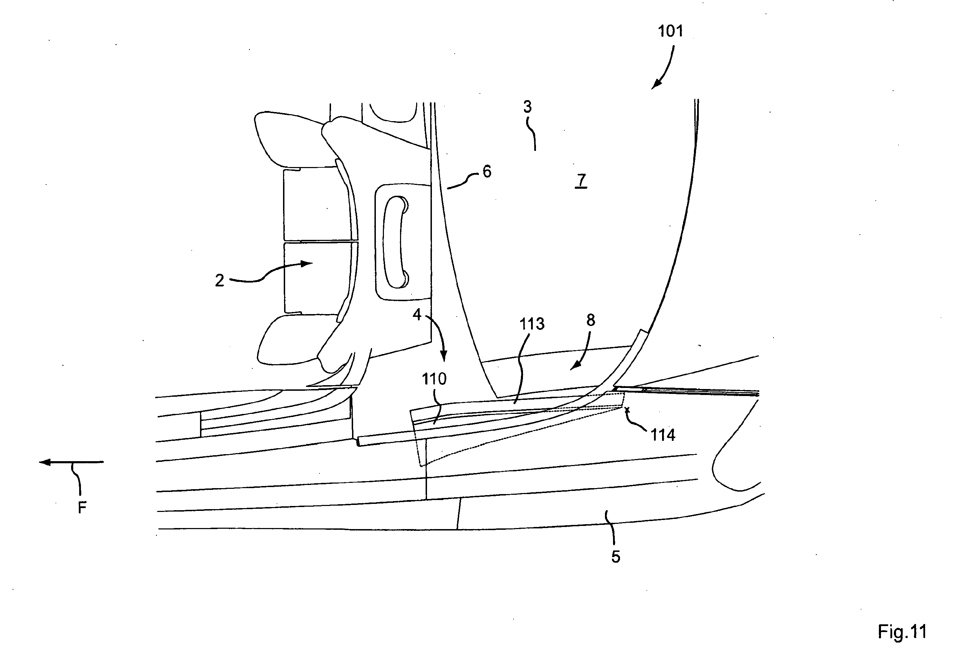

- Fig. 11: das Fahrzeug nach Fig. 10 während des Ausschwenkens des Rahmenteils,

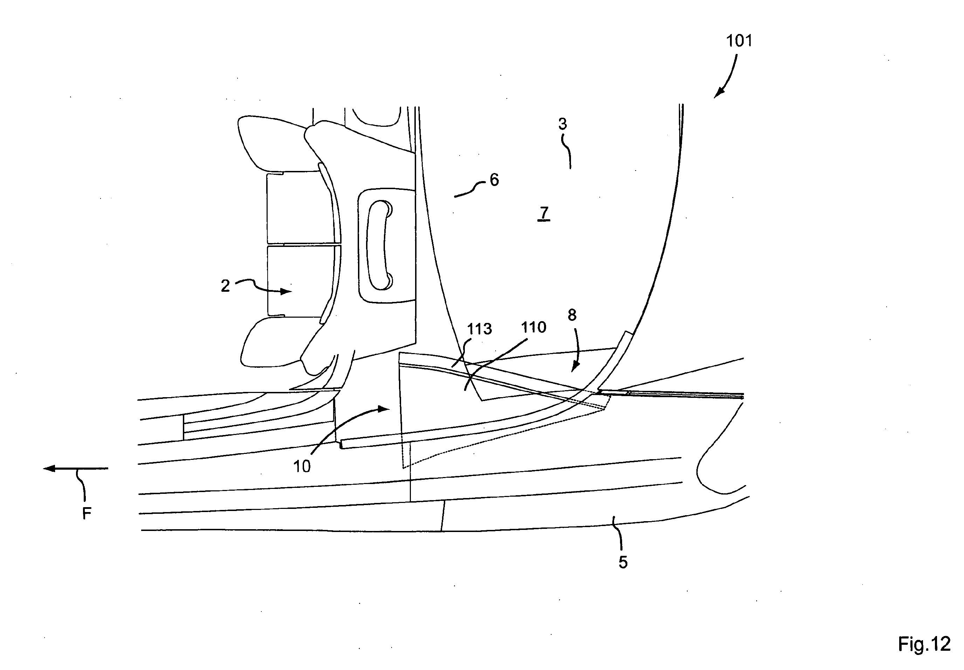

- Fig. 12: das Fahrzeug nach Fig. 11 während des weiter fortschreitenden Ausschwenkens des Rahmenteils,

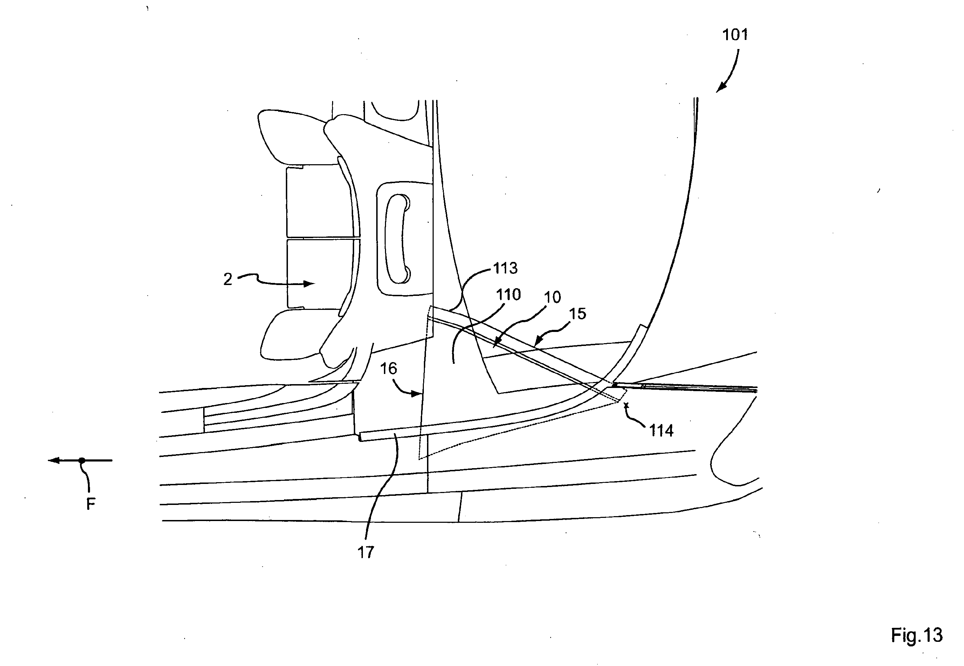

- Fig. 13: eine ähnliche Ansicht wie Fig. 12 bei voll ausgeschwenktem Rahmenteil zur Bewirkung der Abdeckstellung des Verkleidungsteils,

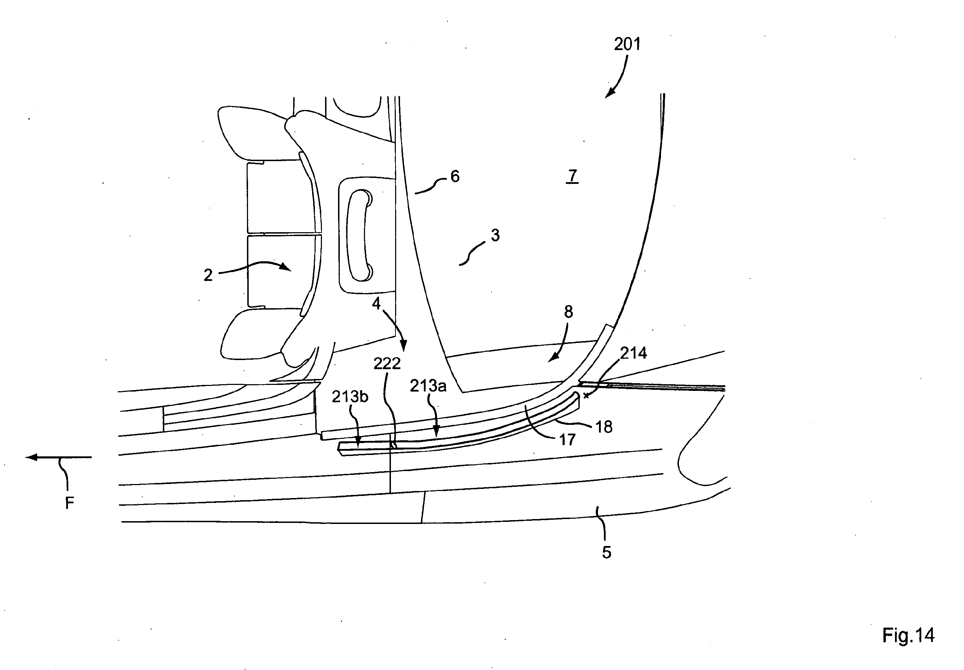

- Fig. 14 bis Fig. 19: eine dritte Ausführungsform des Fahrzeugs, die wie die zweite Ausführungsform ebenfalls einen Schwenkarm als Rahmenteil zum Untergreifen einer in Abdeckstellung langen Seite eines Dreieckstuchs umfasst, der hier jedoch zusätzlich an einem Gelenk in zwei Arme geteilt ist, darin
- Fig. 14: eine Draufsicht auf den hinten links gelegenen Teil des erfindungsgemäßen Cabriolet-Fahrzeugs im dritten Ausführungsbeispiel bei geöffnetem Dach und noch geöffneter Verkleidung,

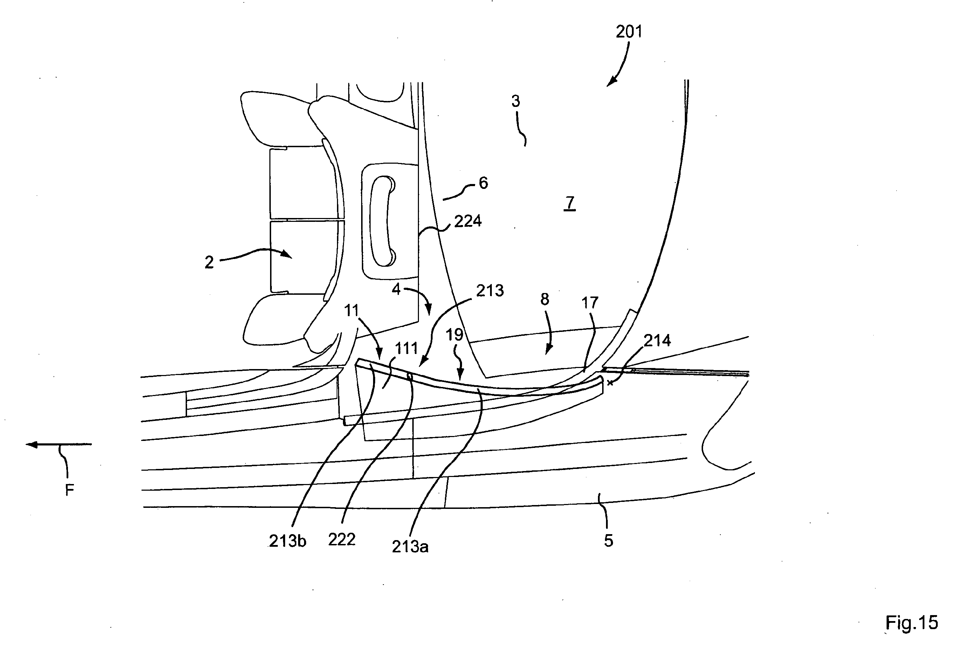

- Fig. 15: das Fahrzeug nach Fig. 14 während des Ausschwenkens des gesamten Rahmenteils,

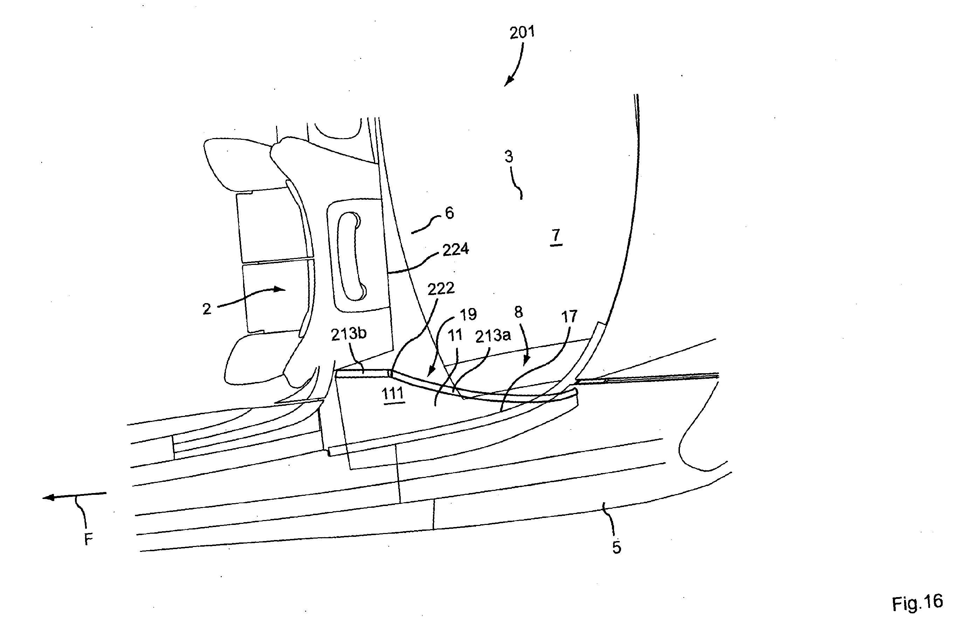

- Fig. 16: das Fahrzeug nach Fig. 15 während des weiteren Ausschwenkens des Rahmenteils bei gleichzeitigem Einknicken des von diesem umfassten Gelenks,

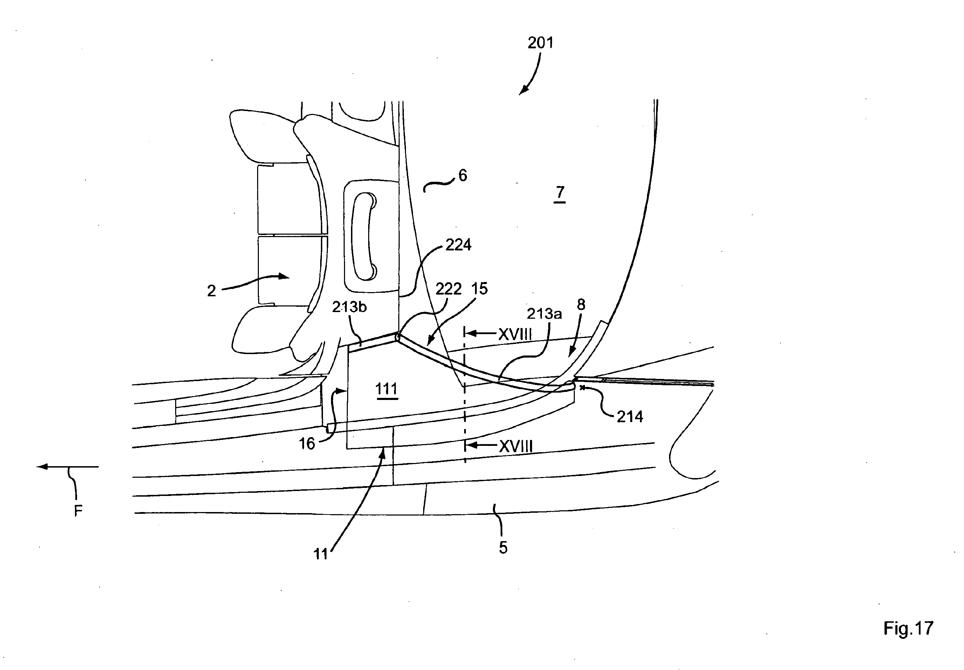

- Fig. 17: eine ähnliche Ansicht wie Fig. 16 bei voll ausgeschwenktem Rahmenteil und eingeknicktem Gelenk zur Bewirkung einer unregelmäßigen Fünfeckform des flexiblen Bereichs des Verkleidungsteils in Abdeckstellung,

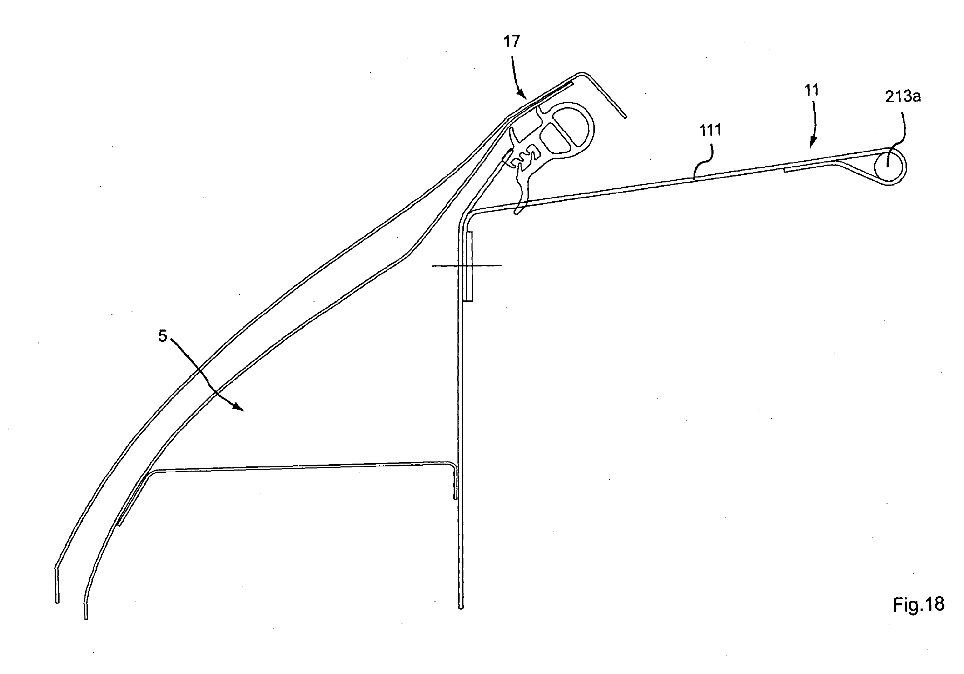

- Fig. 18: einen Schnitt etwa in Richtung der Pfeile XVIII-XVIII in Fig. 17,

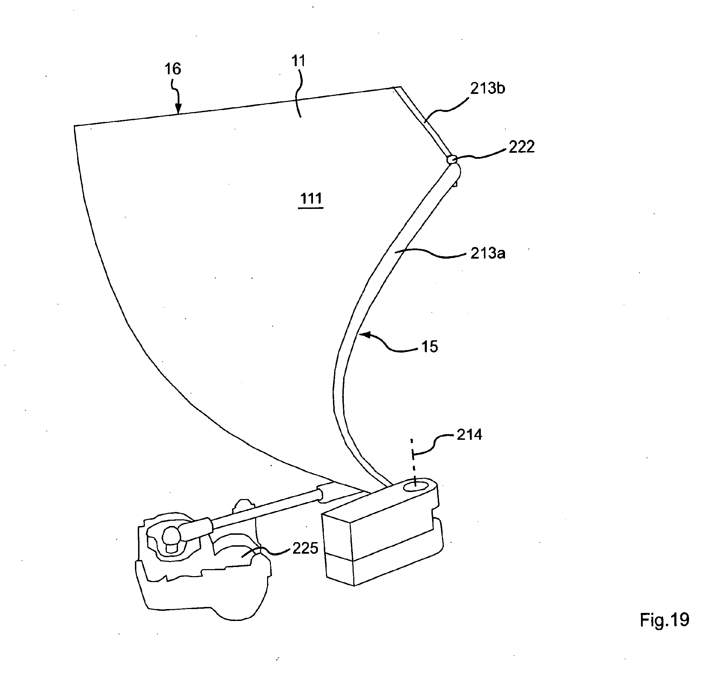

- Fig. 19: ein perspektivische Einzelteilansicht des ausgeschwenktem Verkleidungsteils in Abdeckstellung nach Fig. 17 mit ihren Antriebskomponenten,

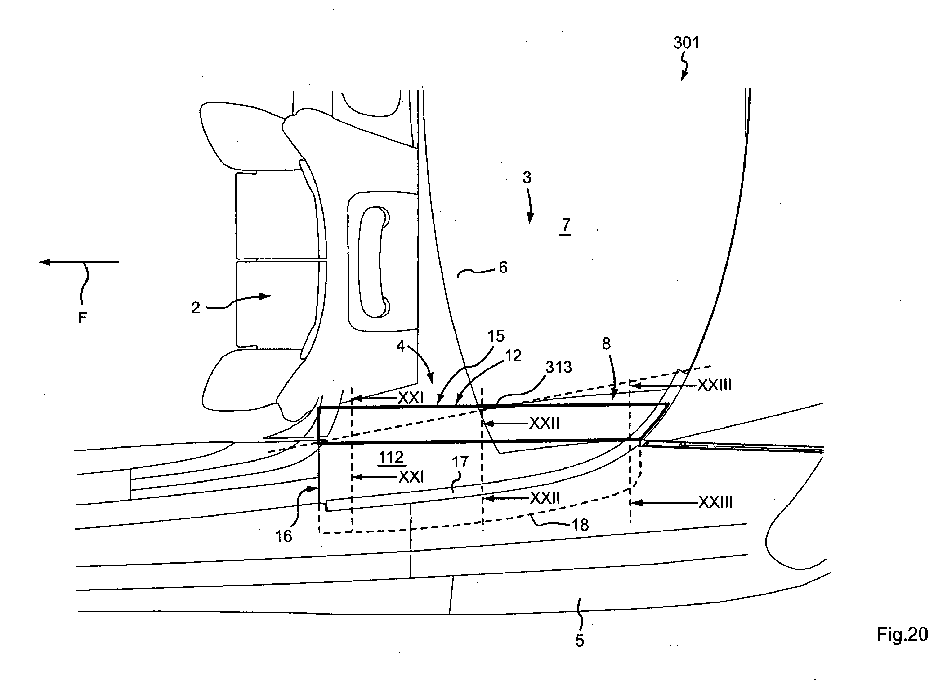

- Fig. 20 bis Fig. 23: eine vierte Ausführungsform des Fahrzeugs, die ein um eine horizontale, im wesentlichen in Fahrzeuglängsrichtung liegende Achse schwenkbares Rahmenteil aufweist, das während seines Ausschwenkens leicht aufwärts und in Fahrzeugquerrichtung verlagerbar ist, darin
- Fig. 20: eine Draufsicht auf den hinten links gelegenen Teil des erfindungsgemäßen Cabriolet-Fahrzeugs im vierten Ausführungsbeispiel bei geöffnetem Dach und geschlossener Verkleidung,

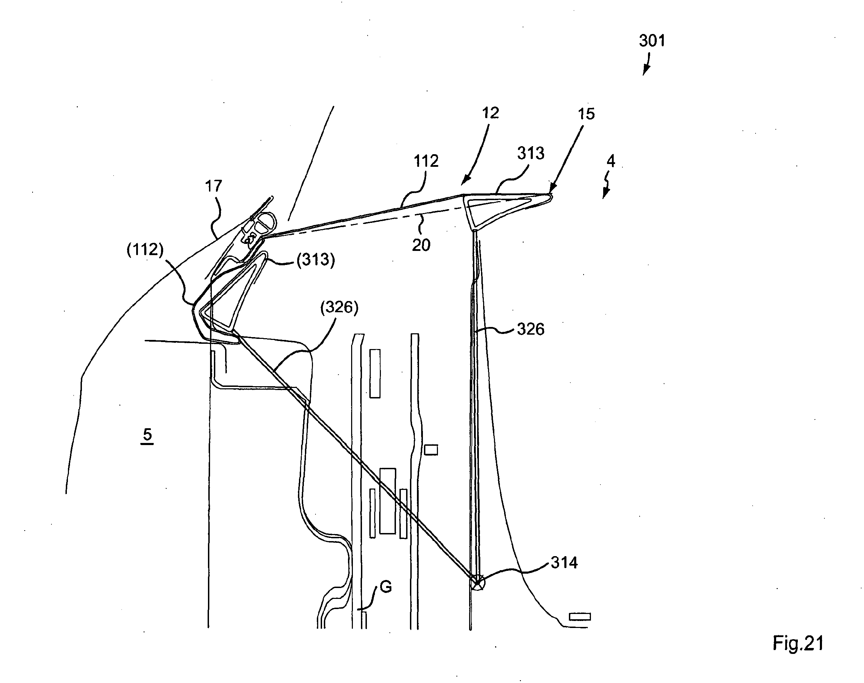

- Fig. 21: einen Schnitt entlang der Linie XXI-XXI in Fig. 20, wobei zusätzlich auch die Ruhestellung der Verkleidung mit eingezeichnet ist,

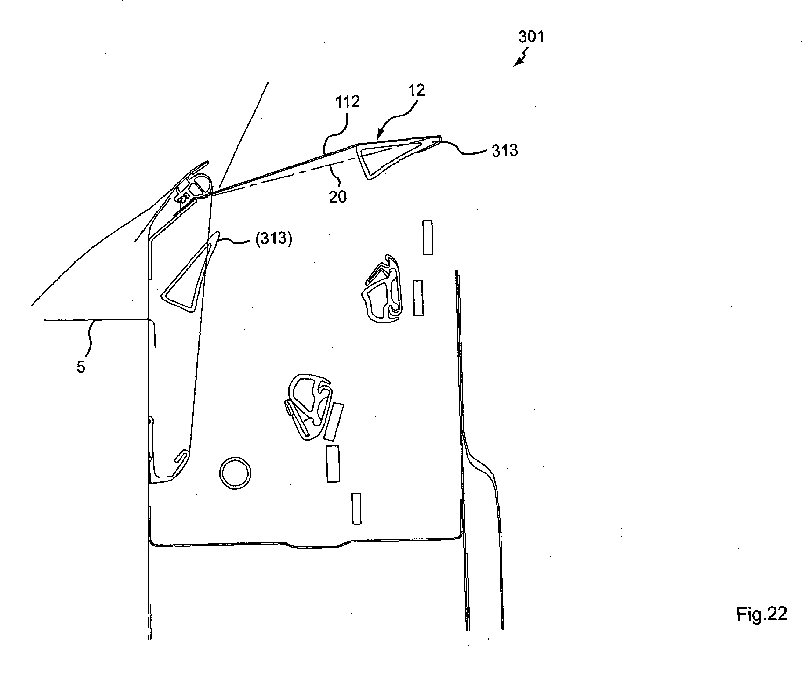

- Fig. 22: eine ähnliche Ansicht wie Fig. 21, jedoch an einem etwas weiter hinten gelegenen Schnitt XXII-XXII in Fig. 20,

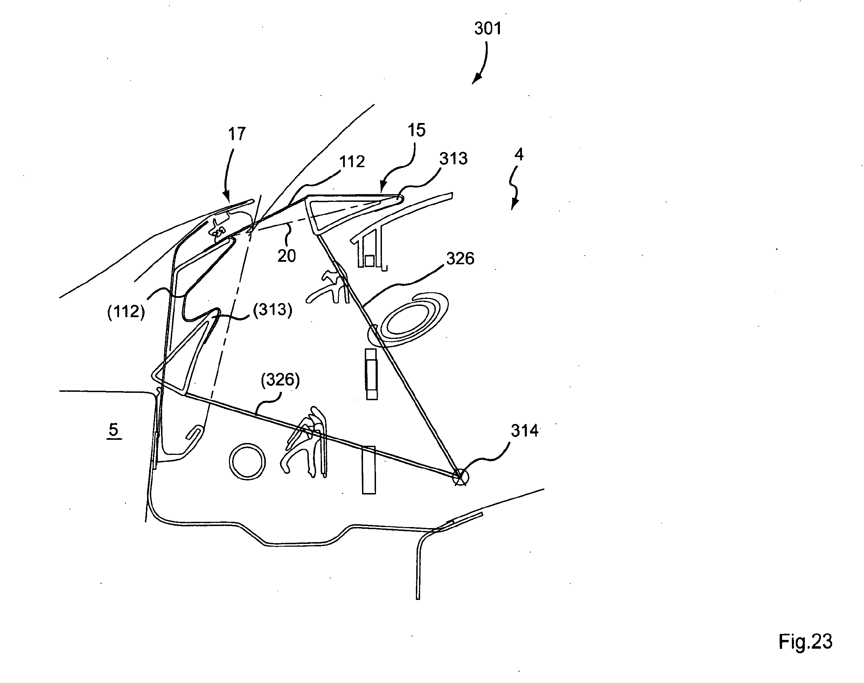

- Fig. 23: eine ähnliche Ansicht wie Fig. 22, jedoch an einem noch weiter hinten gelegenen Schnitt XXIII-XXIII in Fig. 20.

Das erfindungsgemäße Cabriolet-Fahrzeug 1, 101, 201, 301 kann, wie in den Zeichnungen angedeutet, ein mit zumindest einer Rückbank 2 versehenes vier- oder mehrsitziges Fahrzeug sein. Auch - nicht gezeichnet - ein Zweisitzer ist alternativ möglich.

Das bewegliche und in geschlossener Stellung mittelbar oder unmittelbar an einen Windschutzscheibenrahmen anschließende Dach 3 kann zumindest teilweise voneinander getrennte und in sich starre oder mit zumindest jeweils einem starren Rahmen versehene Dachteile (Retractable Hardtop: RHT) umfassen oder ein insgesamt mit einem gemeinsamen Bezug überzogenes Soft-Top bilden. Die Dachbewegung zwischen seiner Öffnungs- und Schließstellung ist manuell oder voll- oder teilautomatisch möglich. In jedem Fall ist das Dach 3 zu seiner Öffnung im hinteren Fahrzeugbereich ablegbar. Hierzu ist eine Eintrittsöffnung 4 in die Karosserie 5 vorgesehen.

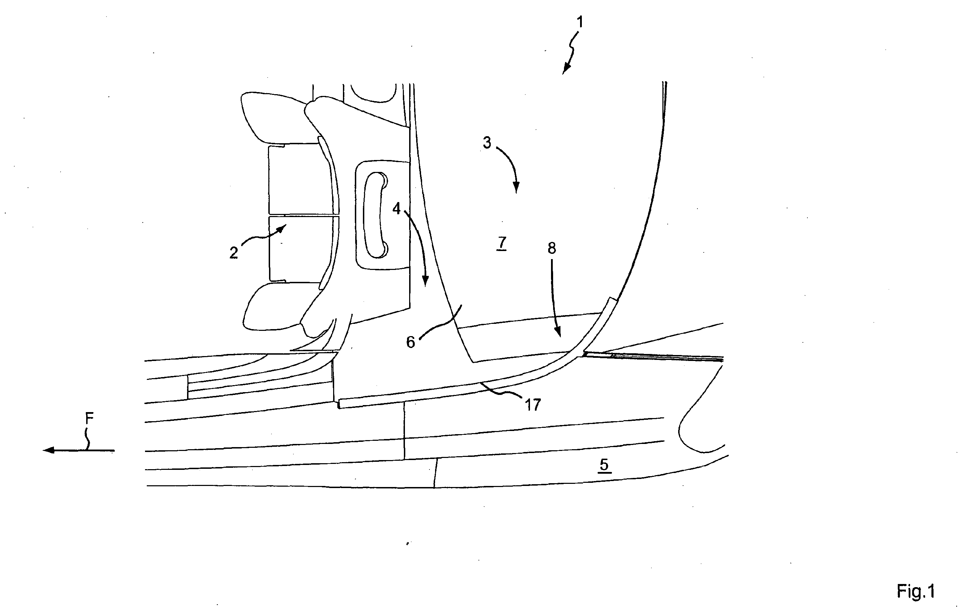

In den hier dargestellten Ausführungsbeispielen ist das Dach 3 über eine sog. Z-Faltung in der Karosserie 5 ablegbar, wobei das im geschlossenen Zustand mit dem Windschutzscheibenrahmen verbundene vorderste Dachende 6 seine Orientierung im abgelegten Zustand beibehält, also mit der Außenseite 7 auch in abgelegter Stellung nach oben weist (Fig. 1).

Dabei fallen die Querränder 8 des vorderen Dachendes 6 aufgrund der bombierten Dachform zu den Seiten hin ab. Wenn der bezüglich der Fahrzeugquerrichtung mittlere Bereich des vorderen Dachendes 6 in etwa in der Ebene der Eintrittsöffnung 4 liegt, ragen daher die Querränder 8 weiter nach unten in die Karosserie 5. Bei geöffnetem Dach 3 kann somit dieses selbst mit seiner nach oben weisenden Seite 7 einen optischen Abschluss für einen wesentlichen Teil des mittleren Bereichs der Eintrittsöffnung 4 ausbilden. Ein übergreifender Deckel oder ähnliches ist dann zumindest hier entbehrlich. Aufgrund der abfallenden Querränder 8 ist außen hingegen eine gesonderte optische Abdeckung vorteilhaft. Im vorliegenden Ausführungsbeispiel sind hierfür Verkleidungen 9, 10, 11, 12 vorgesehen, die jeweils einen elastisch verformbaren Bereich 109, 110, 111, 112 umfassen.

Dieser flexible Bereich 109, 110, 111, 112, der hier die gesamte in Abdeckstellung außen liegende und sichtbare Oberfläche des Verkleidungsteils 9 einnimmt, kann aus Leder oder lederartig oder textil, netz- oder gazeartig oder vergleichbar ausgebildet und an die Innen- oder Außenfarbe des Fahrzeugs 1, 101, 201, 301 angepasst sein.

In jedem Fall ist es möglich, die Verkleidung 9, 10, 11, 12 in ihrer freigebenden Ruhestellung vollständig unterhalb einer Karosseriebrüstung 17 optisch verdeckt zu lagern, so dass die Eintrittsöffnung 4 in voller Größe für die Dachbewegung zur Verfügung steht. Auch für das optische Erscheinungsbild des Fahrzeugs 1, 101, 201, 301 ist das vollständige Verdecken der Verkleidung 9, 10, 11, 12 in ihrer Ruhestellung sehr vorteilhaft.

Der elastisch verformbare Bereich 109, 110, 111, 112 kann eine erhebliche Längserstreckung von zum Beispiel auch mehrere zehn Zentimetern aufweisen, die auch erheblich größer sein kann als die Erstreckung quer hierzu. Die Quererstrekkung kann jedoch auch etwa gleichgroß sein.

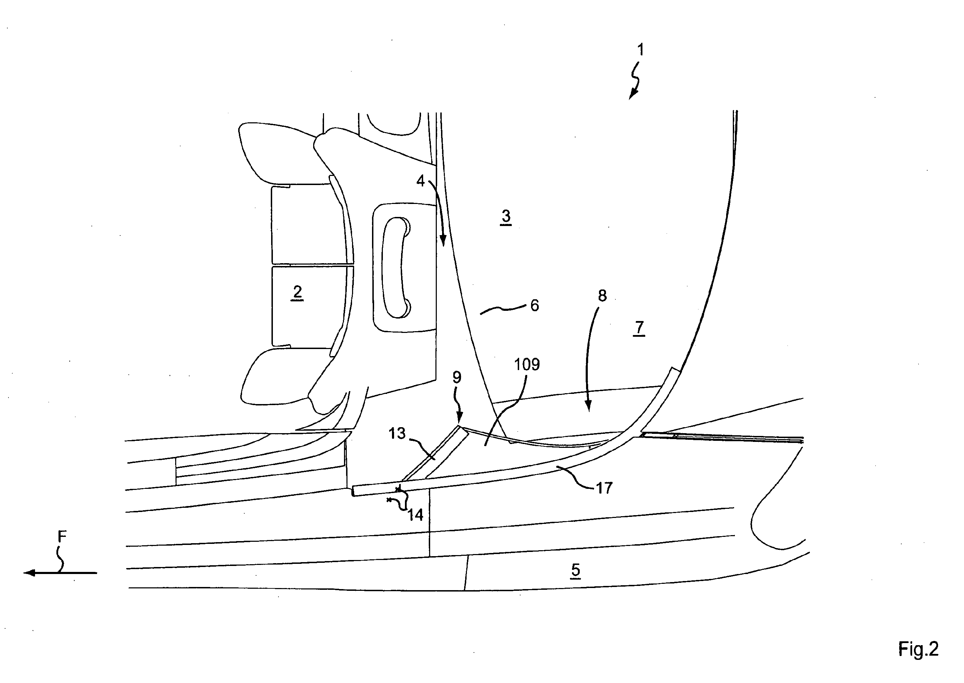

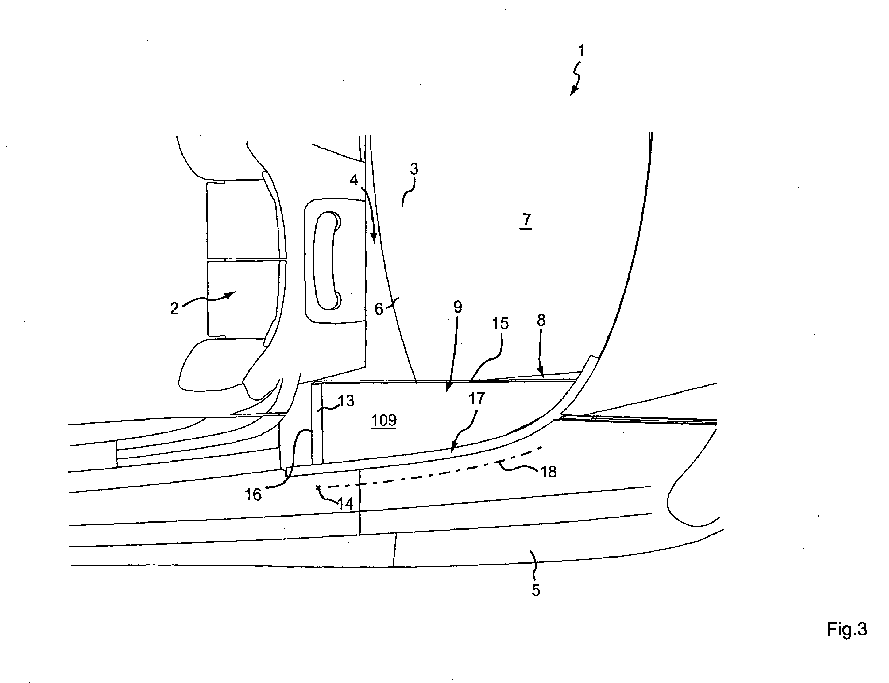

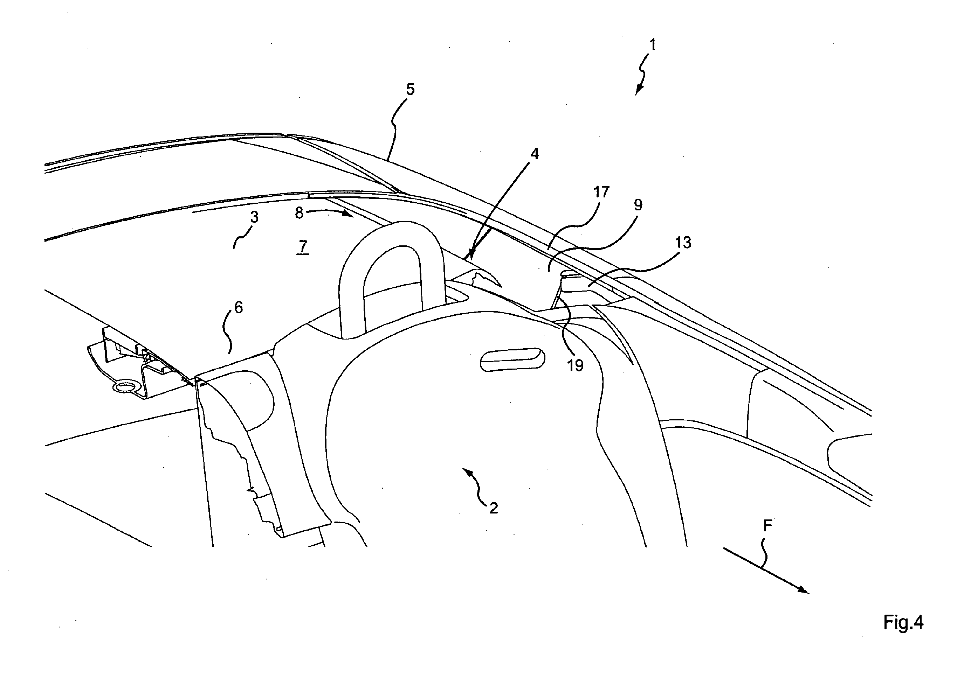

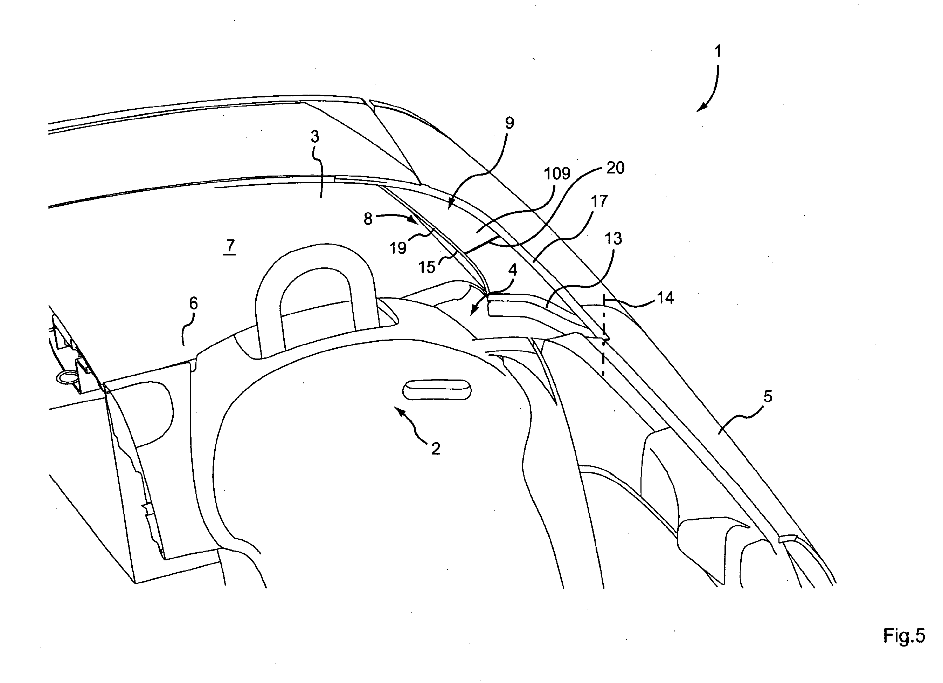

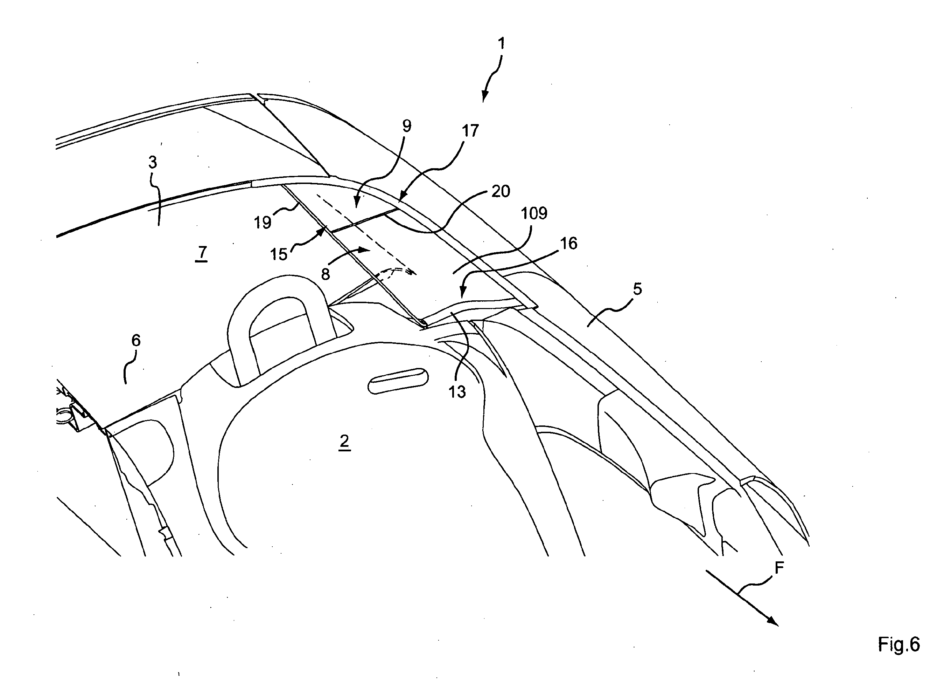

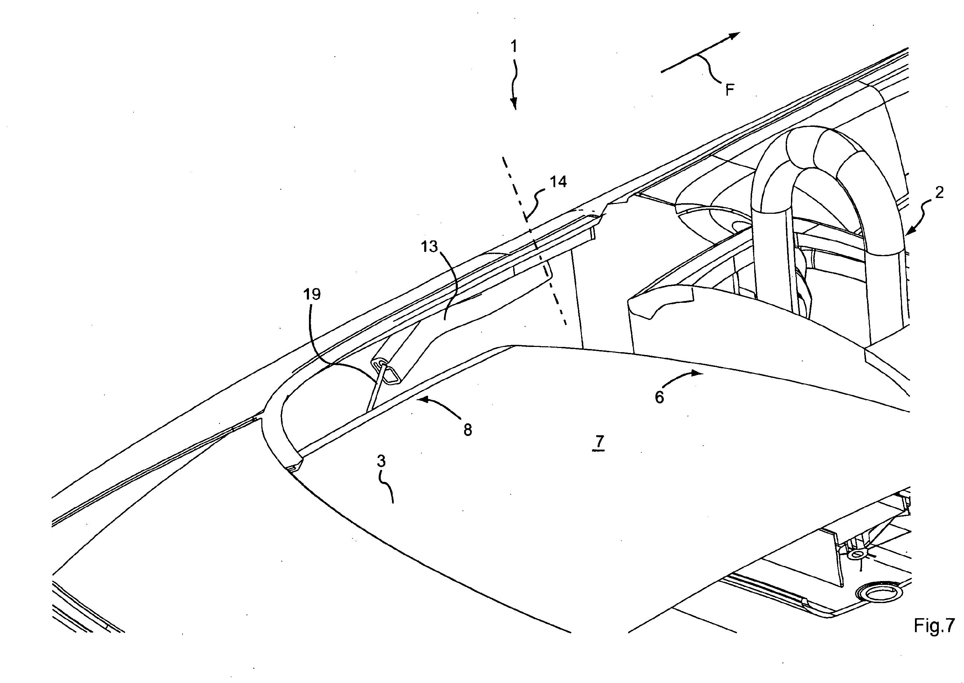

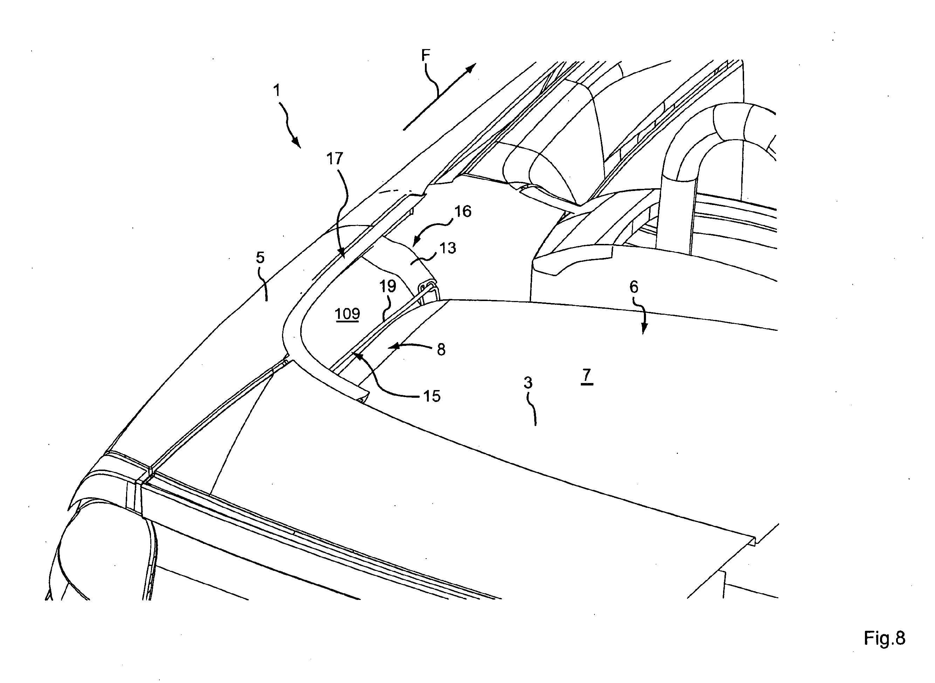

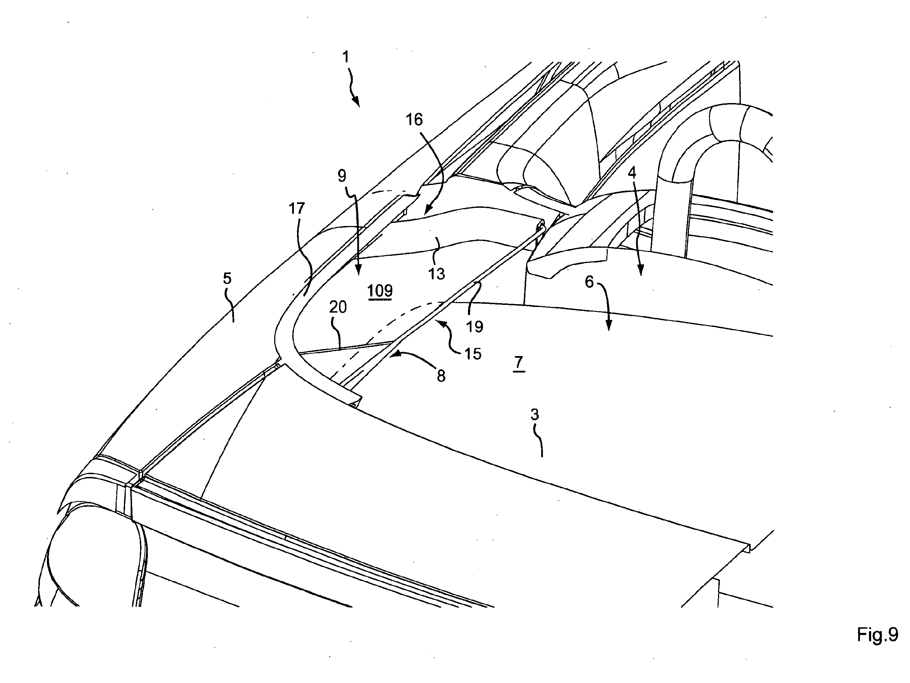

Gemäß dem ersten Ausführungsbeispiel (Fig. 1 bis Fig. 9), ist die Verkleidung 9 bei geöffnetem und daher im Heckbereich der Karosserie 5 abgelegtem Dach 3 aus einer unter der seitlichen Fensterbrüstung gehaltenen Ruhestellung (Fig. 1) in seine den Querrandbereich 8 des Daches 3 überdeckende Abdeckstellung (Fig. 3) verlagerbar. Hierfür ist als Rahmenteil ein Schwenkarm 13 vorgesehen, der in Ruhestellung in etwa parallel und nach hinten weisend verdeckt in der Karosserie 5 gehalten und um eine ungefähr vertikale Achse 14 nach vorne aufschwenkbar ist. Der Schwenkarm 13 kann als Strangpressprofil gebildet und von einer Randkante des flexiblen Bereichs vollständig übergriffen sein. Die Achse 14 kann leicht geneigt sein, so dass die Ausschwenkbewegung gleichzeitig ein Anheben des an den Schwenkarm angebundenen flexiblen, elastisch verformbaren Bereichs 109 der Verkleidung 9 bewirken kann. Dieser elastisch verformbare Bereich 109 ist von dem Schwenkarm 13 in eine in Draufsicht dreiecksförmige Gestalt bewegbar. Dieses aufgespannte Dreieckstuch weist einen von dem Schwenkarm 13 unterstützten kurzen Schenkel 16 und einem ungefähr parallel zur Fahrtrichtung liegenden langen Schenkel 15 auf. Der Schwenkarm 13 ist hier nur der kurzen Seitenkante 16 zugeordnet, die lange Seitenkante 15 verläuft durch die vom Schwenkarm 13 eingetragene Spannung in den elastischen Bereich 109 frei und ohne gesonderte Unterstützung. Um den geradlinigen Verlauf dieses Längsrands 15 zu sichern, kann ein Spanngummi 19 vorgesehen sein. Ein zweiter Schwenkarm wäre hier alternativ oder zusätzlich möglich.

Ein zweites Spanngummi 20 kann zudem quer zu dem ersten verlaufen und ein definiertes Einfalten des Bereichs 109 sicherstellen.

In der Ruhestellung nach Fig. 1 ist der Schwenkarm 13 hier vollständig unterhalb einer die Eintrittsöffnung seitlich begrenzenden Brüstung 17 der Karosserie 5 optisch verdeckt gehalten, so dass er von oben nicht sichtbar ist.

Der elastische, flexible Bereich 109 ist dann eingefaltet und hängt nach unten frei. Hierfür ist dieser Bereich 109 an einer dem Rahmenteil 13 benachbarten und in Ruhestellung ungefähr längs zur Fahrtrichtung F verlaufenden Kante 18 (in Figur 3 angedeutet) unterhalb einer die Eintrittsöffnung seitlich begrenzenden Brüstung 17 der Karosserie 5 optisch verdeckt angebunden.

Wie oben angedeutet, ist durch die sog. Z-Faltung des Daches 3 dieses derart abgelegt, dass das vordere Dachende 6 in gleicher Orientierung abgelegt ist und seine bei geschlossenem Dach 3 nach oben weisende Seite 7 eine optische Abschlussfläche für einen wesentlichen Teil des mittleren Bereichs der Eintrittsöffnung 4 ausbildet. Im quer außen gelegenen Seitenbereich hingegen liegen die Verkleidungsteile 9 oberhalb von seitlichen Rändern 8 des vorderen Dachendes 6. Das Dach 3 ist dann in diesen Seitenbereichen abgedeckt. Zusätzliche Verkleidungsteile, auch für Gestängedurchtrittsbereiche, können vorgesehen sein. Ebenso kann die Lage und Größe der Verkleidungen 9 je nach Anforderungen im Fahrzeug variieren und jeweils passend ausgewählt werden.

Im zweiten Ausführungsbeispielen nach den Figuren 10 bis 13 sind die Verhältnisse prinzipiell ähnlich: Auch hier bildet der aufgespannte flexible Bereich 110 der Verkleidung 10 ein Dreieckstuch aus. Allerdings ist in dieser Ausführung die lange Seite 15 der abgedeckten Dreiecksfläche von einem als Rahmenteil wirkenden Schwenkarm 113 unterstützt, der um eine weiter hinten gelegene Achse 114 mit einer Komponente quer zum Fahrzeug 101 ein- und ausschwenkbar ist.

In die Eintrittsöffnung 4 freigebender Stellung (Fig. 10) liegt der Schwenkarm 113 (gestrichelt eingezeichnet) optisch verdeckt unterhalb der Brüstung 17 und schwenkt über die Zwischenstellungen nach den Figuren 11 und 12 in die Abdeckstellung nach Fig. 13, in der das Dreieckstuch 110 voll aufgespannt ist und die seitlichen Querränder 8 des vorderen Dachendes 6 überdeckt. Auch hier kann die Schwenkachse 114 vertikal oder leicht schräg gelegen sein, so dass die Ausschwenkbewegung mit einer Aufwärtsbewegung der Verkleidung 10 verbunden sein kann.

Im dritten Ausführungsbeispiel nach den Figuren 14 bis 19 ist wie im zweiten Ausführungsbeispiel ein Schwenkarm 213 vorgesehen, der um eine heckseitige Schwenkachse 214 bewegbar ist. Allerdings ist der Schwenkarm 213 in sich geteilt. Hier ist genau ein Gelenk 222 vorgesehen. Auch mehrere Gelenke wären möglich. Die Schwenkachse dieses Gelenkes 222 steht parallel zur Achse 214.

Das Gelenk 222 kann im Öffnungssinn federbeaufschlagt sein. Einerseits spannt es dadurch die beidseits des Gelenks 222 gelegenen und den elastischen Bereich 111 einfassende Arme 213a (verbunden mit der Schwenkachse 214) und 213b (freies Ende) des Rahmenteils 13 auf, so dass diese in der Schließstellung nach Fig. 14 fluchtend zueinander liegen. Andererseits wirkt mit zunehmendem Fortschreiten des Übergangs in die Abdeckstellung der Verkleidung 11 (Übergang von Fig. 14 zu Fig. 17) die Stoffspannung des flexiblen Bereichs 111 der Öffnungsbewegung der Arme 13a, 13b des Rahmenteils 13 entgegen. Der äußere Arm 13b wird daher gegen das weitere Ausschwenken zurückgezogen und gelangt hier in eine etwa parallel zur Fahrtrichtung F gelegene Ausrichtung (Fig. 17), wohingegen sich heckwärts vom Gelenk 222 wie in den obigen Ausführungsbeispielen ungefähr eine Dreieckstuchgestalt der Verkleidung 11 ergibt. Der verkleidete Bereich wird dadurch besonders groß und ist an die jeweiligen geometrischen Bedingungen im Fahrzeug sehr gut anpassbar. Hier grenzt die vordere Innenkante 19a der Verkleidung 11 direkt an die feste Oberflächenverkleidung 223 an, wodurch die äußere Gestalt des Fahrzeugs 201 sehr geschlossen wirkt. Die Linie 224 der Rückwand des Insassenraums geht dann ohne Unterbrechung in die Seitenlinie 19 der Verkleidung 11 über.

Je nach Lage des Gelenkes 222 sind auch andere Formgebungen des flexiblen Bereichs 111 möglich. Bei weiter hinten angeordnetem Schwenkgelenk wäre auch im aufgespannten Zustand in etwa eine Rechteck- oder Trapezgestalt der aufgespannten Verkleidung möglich. Wie in Fig. 19 erkennbar ist, reicht ein einziger Antrieb 225 für die Gesamtbewegung der Verkleidung 11 aus.

Im vierten Ausführungsbeispiel nach den Figuren 20 bis 23 ist die Verkleidung 12 nicht um eine aufrechte, sondern um eine liegende Achse 314 schwenkbar. Der elastisch verformbare Bereich 112 wird dadurch aus seiner tief unter der Brüstung 17 gelegenen Ruhestellung in seine über dem seitlichen Rand 8 des Daches 3 gelegene Abdeckstellung herausgeschwenkt.

Die Schwenkachse 314 liegt hier zumindest nahezu parallel zur Fahrtrichtung F. Bei einer horizontalen Achslage gelangt auch die ausgeschwenkte Verkleidung 12 in eine horizontale Lage in Abdeckstellung. Sofern das Fahrzeug 301 nach hinten abfällt, kann auch die Achse 314 leicht nach hinten geneigt sein, um eine schräge geschlossene Lage der Abdeckung 12 zu bewirken.

Radial von der Achse 314 ausgehende und zu dem Rahmenteil 313 führende Schwenkhebel 326 sind an der Verkleidung 12 so plaziert, dass seitliche Dachgestängeteile G kollisionsfrei übergriffen werden können. Auch muss die Achse 314 nicht als Baueinheit durchgehend ausgebildet sein, sondern kann zum Beispiel nur am vordersten und hintersten Ende jeweils Anbindungen für die Schwenkhebel 326 ausbilden, wohingegen dazwischen Raum für Teile des Daches 3 und seines Gestänges G verbleibt.

Auch hier kann ein Spanngummi 20 oder dergleichen Zugelement vorgesehen sein, um ein definiertes Einfalten des flexiblen Bereichs 112 zu ermöglichen.

In den Ausführungsbeispielen sind die Verkleidungsteile 9, 10, 11, 12 bei geschlossenem und bei geöffnetem Dach 3 vollständig geschlossen. Alternativ können solche Verkleidungsteile auch bei geschlossenem Dach zum Ermöglichen eines Gestängedurchtritts ganz oder teilweise - in einer Zwischenstellung - geöffnet sein.

Auch der Karosseriebereich der Brüstung 17 und/oder ein weiter hinten liegender Deckelteil kann zusätzlich auf-und zubeweglich sein.

Neben der beschriebenen Schwenkbarkeit des jeweiligen Rahmenteils 13, 113, 213, 313 ist auch ein in Schubrichtung von hinten getriebenes Ausschieben einer flexiblen Verkleidung möglich.

## Patentansprüche

1. Cabriolet-Fahrzeug (1;101;201;301) mit einem zumindest im wesentlichen unterhalb einer Eintrittsöffnung (4) in der Karosserie (5) ablegbaren Dach (2), wobei zumindest ein Teilbereich der Eintrittsöffnung (4), insbesondere quer außen gelegene Teilbereiche, bei abgelegtem Dach (2) durch ein oder mehrere zwischen einer abdeckenden und einer freigebenden Stellung bewegliche Verkleidungsteil(e) (9;10;11;12) mit zumindest einem in sich elastisch verformbaren Bereich (109;110;111; 112) abdeckbar ist oder sind,
**dadurch gekennzeichnet,**
**dass** zumindest einer Seitenkante (15;16) des elastisch verformbaren Bereichs (109;110;111;112) ein beweglicher, in einer flächig liegenden Abdeckstellung den elastischen Bereich spannender Rahmenteil (13;113;213;313) zugeordnet ist, der aus einer den zu verkleidenden Öffnung freilassenden Ruhestellung in eine den verformbaren Bereich (109;110;111;112) spannende Stellung ausschieb- und/oder -schwenkbar ist.

2. Cabriolet-Fahrzeug (1) nach Anspruch 1,
**dadurch gekennzeichnet,**
**dass** der zumindest eine Rahmenteil (13;113;213;313) in seiner Ruhestellung unterhalb einer die Eintrittsöffnung (4) seitlich begrenzenden Brüstung (17) der Karosserie (5) optisch verdeckt halterbar ist.

3. Cabriolet-Fahrzeug (1) nach einem der Ansprüche 1 oder 2,
**dadurch gekennzeichnet,**
**dass** der elastische Bereich (109;110;111;112) der Verkleidung (9;10;11;12) an einer dem Rahmenteil (13;113; 213;313) benachbarten oder gegenüber gelegenen Kante (18) unterhalb einer die Eintrittsöffnung (4) seitlich begrenzenden Brüstung (17) der Karosserie (5) optisch verdeckt karosseriefest halterbar ist.

4. Cabriolet-Fahrzeug (1) nach Anspruch 3,
**dadurch gekennzeichnet,**
**dass** die Verkleidung (9;10;11;12) über den gesamten festgelegten Kantenbereich (18) an einer zumindest im wesentlichen in Fahrzeuglängsrichtung gelegenen Linie angebunden ist.

5. Cabriolet-Fahrzeug (1) nach einem der Ansprüche 1 bis 4,
**dadurch gekennzeichnet,**
**dass** der Rahmenteil (13;113;213;313) aus seiner Ruhestellung ausschwenkbar ist.

6. Cabriolet-Fahrzeug (1) nach Anspruch 5,
**dadurch gekennzeichnet,**
**dass** der Rahmenteil (13;113;213) um eine im wesentlichen vertikal stehende Achse (14;114;214) schwenkbar ist.

7. Cabriolet-Fahrzeug (1) nach Anspruch 6,
**dadurch gekennzeichnet,**
**dass** der Rahmenteil (13;113;213a) den elastisch verformbaren Bereich (109;110;111) nach Art eines Dreieckstuchs aufspannt.

8. Cabriolet-Fahrzeug (1) nach Anspruch 7,
**dadurch gekennzeichnet,**
**dass** ein Rahmenteil (113) in Abdeckstellung mit einer Komponente in Fahrzeuglängsrichtung der Langseite des Dreiecks zugeordnet ist.

9. Cabriolet-Fahrzeug (1) nach einem der Ansprüche 7 oder 8,
**dadurch gekennzeichnet,**
**dass** ein Rahmenteil (13) in Abdeckstellung mit einer Komponente in Fahrzeugquerrichtung der kurzen Seite des Dreiecks zugeordnet ist.

10. Cabriolet-Fahrzeug (1) nach einem der Ansprüche 1 bis 9,
**dadurch gekennzeichnet,**
**dass** der Rahmenteil (213) in sich ein- oder mehrfach gelenkig (222) geteilt ist.

11. Cabriolet-Fahrzeug (1) nach Anspruch 10,
**dadurch gekennzeichnet,**
**dass** ein Gelenk (222) während des Aufbewegens des elastischen Bereichs (111) im Öffnungssinn beaufschlagbar ist und in Abdeckstellung zwei den elastischen Bereich (111) einfassende Arme (213a;213b) aufspannt.

12. Cabriolet-Fahrzeug (1) nach einem der Ansprüche 3 bis 11,
**dadurch gekennzeichnet,**
**dass** der elastisch verformbare Bereich (112) um eine zumindest nahezu parallel zur Fahrtrichtung (F) liegende Achse (314) ausschwenkbar ist.

13. Cabriolet-Fahrzeug (1) nach einem der Ansprüche 1 bis 12,
**dadurch gekennzeichnet,**
**dass** bei geöffnetem Dach (3) das vordere, bei geschlossenem Dach (3) mit einem Windschutzscheibenrahmen verbundene Dachende (6) in gleicher Orientierung abgelegt ist und seine bei geschlossenem Dach (3) nach oben weisende Seite (7) eine optische Abschlussfläche für einen wesentlichen Teil des mittleren Bereichs der Eintrittsöffnung (4) ausbildet.

14. Cabriolet-Fahrzeug (1) nach Anspruch 13,
**dadurch gekennzeichnet,**
**dass** Verkleidungsteile (9;10;11;12) bei geöffnetem Dach (3) seitlich und zumindest teilweise oberhalb von seitlichen Rändern (8) des vorderen Dachendes (6) liegen.
